# EUROPÄISCHE PATENTSCHRIFT

(11) **EP 2 567 348 B1**
(45) Veröffentlichungstag und Bekanntmachung des Hinweises auf die Patenterteilung: **05.10.2016**
(21) Anmeldenummer: 11735373.0
(22) Anmeldetag: 06.05.2011
(51) Int. Cl.: G06K 19/06, G06K 19/07, G06K 19/077, G06K 19/02

(54) **KARTE ZUR ELEKTRONISCHEN ZUGANGSKONTROLLE**
CARD FOR ELECTRONIC ACCESS CONTROL
CARTE POUR CONTRÔLE D'ACCÈS ÉLECTRONIQUE

(30) Priorität: 06.05.2010 DE 102010019615
(43) Veröffentlichungstag der Anmeldung: 13.03.2013
(73) Patentinhaber: Rat Asset & Trading AG, 80637 München (DE)
(72) Erfinder: ERLING, Andreas, 20260 Chonburi (TH); RAUDIES, Falk, 82152 Krailling (DE)
(74) Vertreter: Herzog, Fiesser & Partner Patentanwälte PartG mbB
(86) Internationale Anmeldenummer: PCT/EP2011/002259
(87) Internationale Veröffentlichungsnummer: WO 2011/138042

(56) Entgegenhaltungen:
- WO-A2-01/26030

## Beschreibung

Diese Erfindung betrifft eine Karte zur elektronischen Zugangskontrolle, wie beispielsweise eine Chipkarte oder eine Kreditkarte. Insbesondere betrifft die vorliegende Erfindung eine Karte zur elektronischen Zugangskontrolle mit einem Magnetstreifen und einem elektronischen integrierten Chip.

### HINTERGRUND

Karten zur elektronischen Zugangskontrolle sind sehr weit verbreitet. Sie sind als Kreditkarten, EC-Karten, Smartcards, Chipkarten oder Ähnliches bekannt. Sie werden im Allgemeinen aus Kunststoff bzw. Plastik gefertigt und verfügen häufig über einen integrierten elektronischen Chip und einen Magnetstreifen auf der Rückseite. Herkömmliche Plastikkarten weisen jedoch zahlreiche Nachteile auf. Zum einen werden heutzutage zu Werbezwecken von unübersehbar vielen Unternehmen derartige Plastikkarten angeboten, die häufig lediglich der Kundenbindung dienen und beispielsweise als Bonuskarten eingesetzt werden. Das macht es schwierig, die wirklich wichtigen Karten in der Fülle von weniger wichtigen Karten schnell aufzufinden.

Zum anderen haben die üblicherweise verwendeten Kunststoffmaterialien erhebliche Nachteile, beispielsweise wenn sie mit Magnetstreifen und/oder integrierten elektronischen Schaltkreisen bzw. Mikrochips kombiniert werden. Aufgrund der Härte- bzw. Elastizitätseigenschaften der Materialien müssen zum Teil aufwendige Verbindungstechniken angewandt werden, die letztlich jedoch die Abnutzung und Beschädigung von informationstragenden Komponenten, wie beispielsweise des Magnetstreifens oder des integrierten elektronischen Chips, nicht verhindern können.

Die WO 01/26030 A2 beschreibt eine Datenspeicherkarte mit einem Magnetstreifen und ein Verfahren zum Herstellen einer Datenspeicherkarte.

Gemäß einem Aspekt der vorliegenden Erfindung wird eine Karte zur elektronischen Zugangskontrolle bereitgestellt, wobei die Karte mindestens einen Magnetstreifen und einen elektronischen integrierten Chip aufweist. Die Karte besteht aus einem glasartigen transparenten Material. Der Knoop-Härtegrad des glasartigen transparenten Materials beträgt mindestens 500. Idealerweise kann sich der Härtegrad auch in einem Bereich von 1000 bis 3000 befinden. Die Knoop-Härte von Diamant liegt bei 8000. Entsprechend kann das glasartige Material auch eine Knoop-Härte zwischen 3000 und 8000 aufweisen.

Im Zusammenhand mit der vorliegenden Erfindung werden Härteangaben gemäß Vickers oder Knoop gemacht. Die Vickers-Härte steht in guter Beziehung zu den heute gängigen Härtemessverfahren. So ist ab einem Vickers-Härtegrad von 536 ein Material mit dem Messer noch ritzbar. Die Angabe findet in der Regel ohne Einheit statt. Die hier verwendete Einheit ist kgf/mm² (kgf = kilogramm force je Quadratmilimeter). Die Umrechnung in die SI-Einheit Pascal (Pa) lautet: 1 kgf/mm² = 9,80665 MPa. Bezüglich der Einzelheiten der Härteprüfung wird vereinfacht auf die DIN EN ISO 6507-1: 2005 bis -4: 2005 bzw. die Anweisungen gemäß dem ASTM C 730 (1998-00-00) Standard und die ISO 9385 Bezug genommen. Die Verfahren gemäß dieser Standards soll als den Härteangaben zu Grunde liegend betrachtet werden. Damit ergeben sich dann der sogenannte Vickers'sche Härtegrad (Vickers Hardness Number = VHN oder auch HV) bzw. eine Art Sonderform der Vickers-Härteprüfung: die Härteprüfung nach Knoop. Die Knoop-Prüfung findet häufig Anwendung bei sehr harten spröden Materialien, wie zum Beispiel glasartige Materialien gemäß der vorliegenden Erfindung. Die Knoop-Härte wird häufig mit der Bezeichnung HK referenziert. Die übliche Einheit für die Knoop-Härte ist ebenfalls kgf/mm². Nachfolgend und bereits weiter vorne in dieser Beschreibung wird die Einheit bei den Härteangaben weggelassen. Quarz besitzt ein HK von 820, Silikonkarbid 2480 und Diamant 8000. Die typische Last für den Knoop-Härtegrad beträgt 100 g. 500 g oder 1000 g und die Dauer liegt bei 15 s, 20 s, 25 s oder 30 s. Falls keine abweichenden Angaben gemacht werden, kann nachfolgend vereinfachend von einer Messung mit 100 g (1 Newton bzw. genuer 0,9807 Newton oder ca. 0.1 kp vgl. ISO 9385) und einer Dauer von 20 s ausgegangen werden.

Gemäß diesem Aspekt der vorliegenden Erfindung werden Zugangskarten nicht mehr aus Plastik oder anderen Substanzen, sondern aus einem harten Glas hergestellt. Dies wirkt sich positiv auf die Kombination mit Magnetstreifen und/oder integrierten Schaltkreisen, insbesondere aus Silizium, aus. Die erfindungsgemäße Karte ist weniger elastisch und ermöglicht es, zahlreiche weitere Komponenten in ihr aufzunehmen. Sie ist trotzdem leicht und verfügt über eine glatte Oberfläche.

Vorteilhaft kann das glasartige Material ein Borsilikatglas sein. Dies weist unerwartet günstige Eigenschaften für die Verwendung als Zugangskarten-Basismaterial auf. Das Borsilikatglas kann vorteilhaft eine Knoop-Härte von mehr als 500, bspw. eine Knoop-Härte von 590 aufweisen.

Das Elastizitätsmodul des glasartigen transparenten Materials (bspw. Borsilikatglas) kann vorteilhaft größer als 70 kN/mm² sein. Hierdurch ergeben sich günstige Synergien, wenn Materialien, wie Silizium, welches für die integrierten Schaltkreise (z.B. Mikroprozessoren, Mikrochips, Speicher oder Halbleiterspeicher, EEPROM, RAM, etc.), die in die Karte integriert werden verwendet wird.

Die Oberflächenrauigkeit kann vorteilhaft weniger als 1 nm im Mittelwert betragen. Dadurch wird ein zusätzlicher Polierschritt bei der Herstellung der Karte vermieden.

Die Karte kann vorteilhaft mit einer Stärke von 0,7 mm bis 2 mm ausgeführt werden.

In einer vorteilhaften Ausgestaltung hat die Karte mindestens zwei Lagen, die sich mindestens über die Länge oder die Breite der gesamten Karte erstrecken. Erfindungsgemäß geht es also nicht darum, lediglich Teilbereiche der Karte in Glas auszuführen, sondern die gesamte Karte, also mindestens über die gesamte Länge und/oder Breite, mit einer Lage des glasartigen Materials auszugestalten. Hierdurch werden die günstigen Eigenschaften wie Härte und Elastizität optimal ausgenutzt.

Insbesondere kann die Karte aufgrund der Verwendung des glasartigen transparenten Materials einen hohen ohmschen Widerstand und eine günstige Dielektrizitätskonstante aufweisen. Die relative Dielektrizitätskonstante des glasartigen Materials kann vorteilhaft zwischen 5 und 10, bezogen auf 1 MHz, liegen.

Der dielektrische Verlustfaktor des glasartige Materials kann dann unterhalb von 1 x 10⁻³, bezogen auf 1 MHz liegen.

Der Durchgangswiderstand kann bei 50 MHz (also der spezifische Widerstand) gleich oder größer sein als 1 x 10⁸ Ω x cm. Dies ermöglicht eine Kombination mit elektronischen Komponenten aller Art, insbesondere auch Chip-on-Glas-Konstruktionen, bei denen elektronische Komponenten auch integrierter Art direkt auf das glasartige Material der Karte aufgebracht werden. Auch eine kombinierte Herstellung von elektronischen Strukturen auf dem Glassubstrat, also direkt und unmittelbar auf dem Material der Karte, ist dadurch möglich.

Insbesondere kann das glasartige Material ein Borsilikatglas mit einem hohen Bariumoxid- (BaO) und Aluminiumoxid- (Al₂O₃)Anteil sein.

Vorteilhaft liegt der Ausdehnungskoeffizient sehr niedrig und beträgt 4 bis 4,5 x 10⁻⁶/K. Die hohe thermische Temperaturbeständigkeit und geringe thermische Ausdehnung sind für zahlreiche Anwendungen in Kombination mit elektronischen integrierten Schaltkreisen äußerst vorteilhaft.

Insgesamt ist die Karte gemäß der vorliegenden Erfindung aus einem glasartigen Material mit vorgenannten Eigenschaften deutlich robuster und vielseitiger verwendbar als herkömmliche Plastikkarten. Gerade im Hinblick auf die Kombination mit elektronischen Schaltkreisen und Komponenten bieten Glaskarten deutliche Vorteile.

In einer vorteilhaften Ausgestaltung besteht die erfindungsgemäße Karte aus einer Mehrzahl von Lagen glasartiger Materialien. Eine, mehrere oder alle dieser Lagen erstrecken sich vorteilhaft über die gesamte Breite und/oder Längen der Karte.

In einer weiteren vorteilhaften Ausgestaltung bestehen die Lagen aus glasartigen Materialien, die jedoch unterschiedliche Eigenschaften haben. Dadurch lassen sich zahlreiche neue Anwendungen erzielen, die von den Eigenschaften des Glases profitieren.

Insbesondere kann die oberste Schicht bzw. oberste Lage des glasartigen Materials als berührungssensitive Schicht ausgestaltet sein. Dies ermöglicht Anwendungen nach dem Prinzip eines Touchscreens, sodass bestimmte Funktionen, die elektronisch in der Karte implementiert sind, durch Berührung ein- und ausgeschaltet werden können.

In einer weiteren vorteilhaften Ausgestaltung kann beispielsweise ein optischer Sensor, bspw. ein Fingerabdrucksensor, in der Chipkarte integriert sein. Dieser ermöglicht es, den echten und legitimen Besitzer bzw. Nutzer der Chipkarte anhand des Fingerabdrucks zu identifizieren. Ggf. können auf diese Art bestimmte Funktionen der Chipkarte in Reaktion auf den detektierten Fingerabdruck nur dann freigeschaltet werden, wenn der richtige Fingerabdruck vorliegt. Demnach lassen sich in der erfindungsgemäßen Karte ohne Weiteres zusätzliche Schutzfunktionen integrieren, die bei Plastikkarten große technische Probleme aufwerfen würden.

In einem mehrlagigen Aufbau lassen sich innerhalb der Karte durch Ausnehmungen in einzelnen Lagen Hohlräume schaffen, die dann durch die äußeren glasartigen Schichten abgedeckt werden. In diesen Hohlräumen können während der Herstellung problemlos elektronische Schaltungen oder Funktionen angeordnet oder implementiert werden. Insbesondere ist die elektromagnetische Verträglichkeit in Bezug auf drahtlose Einwirkungen und Anwendungen gegenüber anderen Materialien deutlich verbessert.

Gemäß einem weiteren Aspekt der Erfindung werden auf mindestens einer Seite der Karte Zahlen und/oder Buchstaben aufgebracht, die sich von der sonstigen Oberfläche der Karte deutlich abheben. Diese Zahlen und/oder Buchstaben können reliefartig auf die Karte aufgebracht werden. Die Zahlen- und Buchstabenerhebungen werden vorteilhaft aus einem glasartigen Material hergestellt, das auch in mindestens einer Lage und vorteilhaft in der obersten Lage der Karte verwendet wird. Hierdurch kann die Herstellung vereinfacht und die Buchstaben-Zahlen-Kombinationen können sehr robust hergestellt werden. Gegenüber Plastikkarten, bei denen die hervorstehenden Zahlen-Buchstaben-Kombinationen dadurch entstehen, dass von hinten durch die Karte durchgedrückt wird, weist das Aufbringen von Zahlen- und Buchstabenerhebungen deutliche Vorteile bezüglich der Stabilität und auch der Ästhetik auf. Reliefartige Buchstaben/Zahleninformationen können insbesondere auch von Blinden ertastet werden. Sie können auch dazu verwendet werden, die Nummer oder Aufschrift der Karte mechanisch durch Andrücken zu kopieren.

Gemäß einem weiteren Aspekt der vorliegenden Erfindung ist auf einer Seite der Karte eine Ausnehmung auf der Oberfläche vorgesehen, die den Magnetstreifen aufnehmen kann. Die Tiefe der Ausnehmung kann mindestens der Stärke des Magnetstreifens entsprechen. So liegt der Magnetstreifen nicht auf der Karte auf und ist dadurch nicht mehr ständiger Abnutzung unterworfen. Stattdessen kann die Oberfläche der Karte eine einheitliche plane Oberfläche bieten. Es kann auch eine Vertiefung vorliegen, in der sich der Magnetstreifen befindet, so dass er noch besser geschützt ist. Dies verhindert die Abnutzung und das Lösen des Magnetstreifens. Insbesondere ist die Verbindungstechnik zwischen dem Magnetstreifen, die typischerweise und auch in der vorliegenden Anmeldung als sehr kostengünstige PET-Magnetstreifen ausgestaltet sind, eine häufig nicht erkannte Schwachstelle. Daher wird erfindungsgemäß vorgeschlagen, den Magnetstreifen unter anderem in einer Vertiefung anzuordnen.

Gemäß einem Aspekt der vorliegenden Erfindung wird der Magnetstreifen mit einem Flüssigklebstoff auf Acrylbasis in der Ausnehmung bzw. auf der Karte angebracht. Es hat sich gezeigt, dass Flüssigklebstoffe auf Acrylbasis eine besonders gute Haftung des Magnetstreifens auf den verschiedensten Materialien, insbesondere Materialien mit sehr glatter Oberfläche, ermöglichen.

Gemäß einem weiteren Aspekt der Erfindung ist auf einer Seite, bspw. der Vorderseite, der Karte auch eine Ausnehmung mit mindestens der Dicke eines Chips (insbesondere EMV Chip) vorgesehen. Die Abkürzung EMV bezeichnet eine Spezifikation für Zahlungskarten, die mit einem Prozessorchip ausgestattet sind, und für die zugehörigen Chipkartengeräte (Point-Of-Sale Terminals (POS-Terminals) für den bargeldlosen Zahlungsverkehr und Geldautomaten). Die Buchstaben EMV stehen für die drei Gesellschaften, die den Standard entwickelten: Europay International (heute MasterCard Europe), MasterCard und VISA. In diese Vertiefung bzw. Ausnehmung wird der Chip implementiert, damit er eine plane Oberfläche mit der Karte bildet. Die Verbindungstechnik zwischen dem Chip und dem glasartigen Material kann ebenfalls vorteilhaft ein Klebeverfahren unter Verwendung von acrylischen Polymeren sein. Die Vertiefung des Chips in die Glaskarte schützt den Chip vor Abrieb und Beschädigungen, welche wesentlich stärker wären, würde man den Chip einfach auf die plane Oberfläche aufbringen. Daher wird vorgeschlagen den Chip unter anderem in einer Vertiefung bzw. Ausnehmung anzuordnen. Die Karte kann dann die Vorteile einer Hybridkarte aufweisen und also solche arbeiten.

Erfindungsgemäß wird auch ein Verfahren zum Herstellen einer Karte zur elektronischen Zugangskontrolle bereitgestellt. Gemäß diesem Verfahren wird eine Karte aus einem glasartigen transparenten Material hergestellt, wobei das glasartige transparente Material einen Knoop-Härtegrad von mindestens 500 aufweist. Vorteilhaft kann die Knoop-Härte auch in einem Bereich von 1000 bis 1500 liegen, also in einem Bereich, in dem Keramische Oxide liegen oder im Bereich von 2000 bis 3000, in dem Silikonkarbide liegen. Die Auswahl dieser Materialien kann Vorteile bei der Herstellung und Verarbeitung bieten. Der Knoop-Härtegrad auch in einem Bereich von 3000 bis zur Härte eines Diamanten von 8000 liegen, wobei dies hohe Kosten verursachen kann.

Zusätzlich wird das Material über mindestens eine komplette Lage, also z.B. die ganze Länge und/oder Breite der Zugangskarte, eingesetzt. Weiter können mindestens zwei Lagen des glasartigen Materials zusammengefügt werden, sodass die Karte erfindungsgemäß aus mehreren Lagen glasartigen Materials besteht. Insbesondere können gemäß dem erfindungsgemäßen Verfahren Lagen aus glasartigem Material, die sich über die gesamte Länge und Breite der Karte erstrecken, verwendet werden, deren mechanische, elektrische, optische und magnetische Eigenschaften verschieden sind. Es können dann verschiedene Bereich ausgespart werden, so dass in der oder den Lagen aus glasartigem Material Ausnehmungen oder Vertiefungen entstehen. Insbesondere kann eine Ausnehmung für den Magnetstreifen vorgesehen sein, so dass dieser mindestens bündig mit der Oberfläche der Karte abschließt, sich jedoch nicht über die Oberfläche erhebt. Zur Befestigung des Magnetstreifens können acrylische Polymere verwendet werden. Eine weitere Ausnehmung kann ausgestaltet sein, um einen Chip, insbesondere einen EMV-Chip aufzunehmen. Die Ausnehmung kann dann mindestens die Tiefe des Chip bzw. EMV-Chip aufweisen. Insbesondere kann eine Lage aus glasartigem Material die sich mindestens über die gesamte Breite und/oder Länge der Zugangskarte erstreckt eine Stärke (Dicke) aufweisen, die mindestens der Dicke bzw. Stärke des Chip bzw. EMV-Chip entspricht. Dadurch kann die Herstellung deutlich vereinfacht werden. Gemäß einem weiteren Aspekt können Buchstaben und Zahlen aus einer Schicht herausgearbeitet werden, die auf eine äußere Schicht aus glasartigem Material mit einer Knoop-Härte von mindesten 500 aufgetragen wurde. Die äußere Schicht kann sich dann mindestens über die gesamte Länge und/oder Breite der Zugangskarte erstrecken. Die Schicht aus der die Buchstaben und/oder Zahlen herausgearbeitet werden bzw. welche Buchstaben und Zahlen darstellt, kann dann aus dem gleichen glasartigen Material bestehen und ebenfalls einen Knoop-Härtegrad von mindesten 500 aufweisen.

Weitere Aspekte und Merkmale der vorliegenden Erfindung ergeben sich aus der nachfolgenden Beschreibung von Ausführungsbeispielen anhand der beigefügten Figuren, wobei
Figur 1 ein erstes Ausführungsbeispiel der vorliegenden Erfindung zeigt,
Figur 2 eine Darstellung einer mehrlagigen Ausgestaltung der vorliegenden Erfindung darstellt,
Figur 3 einen Detailausschnitt eines Ausführungsbeispiels der vorliegenden Erfindung mit einer Ausnehmung zur Aufnahme eines integrierten Schaltkreises darstellt,
Figur 4 eine detaillierte Ansicht der Anordnung des Magnetstreifens gemäß einem Ausführungsbeispiel der Erfindung darstellt, und
Figur 5 die Anordnung von Buchstaben bzw. Ziffern gemäß einem Ausführungsbeispiel der Erfindung darstellt.

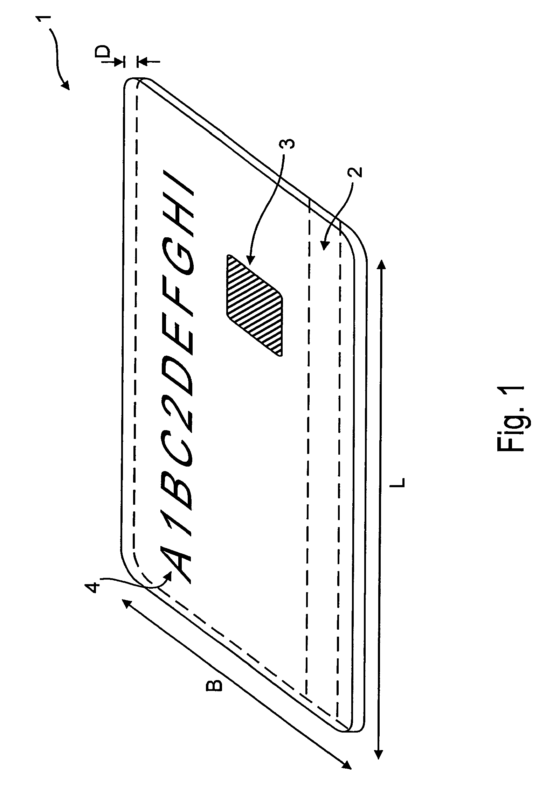

Figur 1 zeigt eine Karte zur elektronischen Zugangskontrolle gemäß einem ersten Ausführungsbeispiel der Erfindung. Die Karte 1 weist einen Magnetstreifen 2 auf der Rückseite auf, der in dieser Darstellung nur durch eine gestrichelte Linie angedeutet ist. Auf der Vorderseite befindet sich in rechteckiger Form ein Bereich, in dem ein elektronischer Chip 3 angeordnet sein kann. Bei den Karten handelt es sich dann vorteilhaft, um eine Hybridkarte. Darüber hinaus befinden sich auf der Vorderseite Zahlen bzw. Buchstaben 4, auf die später noch im Einzelnen eingegangen wird. Die Abmessungen L und B entsprechen der Länge und Breite üblicher elektronischer Zugangskarten. So kann L ungefähr 8,5 cm (85 mm) und B ca. 5,5 cm (55 mm) betragen. Die Stärke der Karte D kann im Bereich von einem halben bis zu 2 oder sogar 3 mm liegen. Der elektronische Chip 3 kann ebenso linksseitig oder an irgendeiner anderen Position der Karte angeordnet sein. Ebenso kann der Magnetstreifen 2 mehr im oberen Bereich der Karte liegen.

Gemäß diesem Ausführungsbeispiel der Erfindung ist die Karte 1 vollständig aus einem glasartigen Material, im vorliegenden Beispiel aus Borsilikatglas ausgeführt. Das Borsilikatglas gemäß diesem Ausführungsbeispiel der Erfindung weist mindestens eine Knoop-Härte von 500, vorteilhaft von 590 auf. Ein weiterer vorteilhafter Bereich für die Knoop-Härte des Materials liegt im Bereich zwischen 1000 und 3000. Somit wird die Karte aus ultrahartem dünnem Glas bzw. Dünnglasschichten aufgebaut.

Darüber hinaus kann das Glas ein Elastizitätsmodul von ca. 70 kN/mm² aufweisen.

Die Poissonzahl des Glases kann vorteilhaft bei etwa 0,2 liegen.

Das glasartige Material weist vorteilhaft eine sehr geringe Rauigkeit von weniger als 1 nm im Mittelwert auf.

Die Karte 1 kann einstückig mit einer Stärke D von 0,7 oder 1 mm ausgeführt werden.

Es kommen auch mehrlagige Ausgestaltungen mit bis zu zwanzig oder mehr Lagen in Betracht, von denen jede eine Stärke zwischen 30 µm und bis zu 0,7 mm oder mehr aufweisen kann.

Das Borsilikatglas gemäß diesem Ausführungsbeispiel hat vorteilhaft eine hohe hydrolytische Beständigkeit (beispielsweise hydrolytische Klasse HGB 1, mit einem Basenäquivalent von Na₂O je Gramm Glasgrieß von 20 µg/g) aufweisen.

Die Säurebeständigkeit kann nach DIN 12116 in einer Säureklasse von S2 (mit halbem Oberflächengewichtsverlust nach 6 Stunden) etwa 1,4 mg/dm² betragen.

Die Laugenbeständigkeit kann nach DIN ISO 695 gemäß der Laugenklasse A2 ausgestaltet sein, sodass ein Oberflächengewichtsverlust nach 3 Stunden von etwa 90 mg/dm² gewährleistet ist.

Die vorgenannten Merkmale machen die erfindungsgemäße Karte für extreme Anwendungen tauglich und im Alltage deutlich resistenter als herkömmliche Plastikkarten.

Die elektrischen Eigenschaften können vorteilhaft so gewählt werden, dass die relative Dielektrizitätskonstante bei 6,7, bezogen auf 1 MHz liegt.

Der dielektrische Verlustfaktor kann dann bei 61 x 10⁻⁴**,** bezogen auf 1 MHz liegen. Der spezifische Durchgangswiderstand kann dann vorteilhaft bei 50 Hz 1,6 x 10⁸ Ω x cm, bezogen auf 250°C oder 3,5 x 10⁶ Ω x cm bei 350 °C liegen.

Hierdurch werden die elektromagnetische Verträglichkeit und damit die Tauglichkeit bei der Kombination mit elektrischen Komponenten deutlich verbessert. Es liegt nicht nur hohe Stabilität, Transparenz und Resistenz gegen Umwelteinflüsse vor. Darüber hinaus wird können elektromagnetische Wellen gut in das Material eindringen, Kurzschlüsse oder Kriechströme werden vermieden und Leitungen lassen sich direkt am oder im glasartigen Material verlegen.

Bei mehrlagigen Ausgestaltungen kann die Dicke einer Lage 0,030 mm, 0,050 mm, 0,070 mm, 0,1 mm, 0,145 mm, 0,175 mm oder 0,210 mm betragen.

Gemäß einem weiteren Ausführungsbeispiel kann das Material der Karte 1 ein Borsilikatglas mit einem hohen BaO- und Al₂O₃-Anteil sein. Es kann in dieser oder anderen Anwendungen eine Knoop-Härte von mindestens 500, vorteilhaft von 550 +/- 10 % oder auch 590 aufweisen. Dadurch ist die Karte für den Einsatz beispielsweise als Kreditkarte einsatzfähig.

Vorteilhaft ist der mittlere thermische Ausdehnungskoeffizient außerordentlich gering und beträgt ca. 4 bis 4,5 x 10⁻⁶/K. Die hohe thermische Temperaturbeständigkeit und geringe thermische Ausdehnung sind für zahlreiche Anwendungen, in denen insbesondere mit elektronischen integrierten Schaltkreisen aus Silizium gearbeitet bzw. kombiniert wird, von großem Vorteil. Hierdurch wird gewährleistet, dass die integrierten Schaltkreise aus Silizium innerhalb der Karte 1, aus dem vorgenannten Material nicht beschädigt werden.

Die Laugenklasse nach DIN ISO 695 kann dann A3 sein, sodass nach 3 Stunden lediglich 460 mg/dm² Verlust vorliegen. Die relative Dielektrizitätskonstante könnte dann 6,2 bei 1 MHz und der dielektrische Verlustfaktor 9 x 10⁻⁴ betragen.

Der spezifische Gleichstromdurchgangswiderstand wäre dann mit 6 x 10¹³, 3,2 x 10¹¹ oder 1,6 x 10⁹ Ω x cm je nach Temperatur vorteilhaft. Hierdurch werden Anwendungen möglich, die extrem hochohmige Trägersubstanzen erfordern. Insbesondere können Kombinationen mit medizinischen Sensoren implementiert werden.

Materialstärken für mehrlagige oder auch einstückige Karten könnten dann bei 0,05 mm, 0,1 mm, 0,145 mm, 0,175 mm oder 0,2 mm liegen.

Bei Verwendung eines Borsilikatglases mit den genannten Eigenschaften kann insbesondere auch die Anwendung als Karte zur elektronischen Zugangskontrolle eine abschließende mechanische Politur der Oberfläche entfallen, was den Herstellungsprozess vereinfacht.

Gemäß einem weiteren Ausführungsbeispiel der Erfindung kann die Karte auch aus einem alkalifreien Glas mit hoher Temperatur- und Schockfestigkeit bestehen.

Diese Karte aus diesem Material kann einstückig oder mehrlagig ausgestaltet sein.

Insbesondere würde sich in diesem und den vorangegangenen Ausführungsbeispielen vorteilhaft eine Lage des Materials über mindestens die gesamte Breite B und/oder die gesamte Länge L der Karte 1 erstrecken.

Durch die Verwendung von alkalifreiem Glas können im Herstellungsverfahren und auch später bei besonderen Anwendungen große Temperaturzyklen gehandhabt werden.

Das Aluminiumsilikatglas kann eine Vickers-Härte von ca. 633 betragen. Insbesondere lassen sich mit diesen Materialien vorteilhaft Kombinationen mit Displaystrukturen, insbesondere TFT-Displays, bereitstellen. Die Materialstärken können vorteilhaft bei 0,5 mm, 0,7 mm 1,1 mm oder geringer liegen.

In einer weiteren Ausgestaltung kann das glasartige Material ein Erdalkali-Boro-Aluminiumsilikatglas sein. Hierdurch kann die Karte 1 insbesondere für Chip-on-Glas-(COG) Anwendungen, in Kombination mit TFT-Displays oder LCD- (Liquid Cristal Displays) Anwendungen vorteilhaft eingesetzt werden. Hier kommt insbesondere eine vorteilhafte Materialstärke einer oder mehrerer Lagen von 0,7 mm in Betracht. Die Knoop-Härte kann vorteilhaft über 500 liegen.

In einer weiteren Ausgestaltung kann die Karte 1 mindestens eine Lage eines hochreinen weißen Floatglases aufweisen. Diese kann eine Stärke von 0,4 mm, 0,5 mm, 0,7 mm, 0,95 mm ,1 mm oder geringer aufweisen. Vorteilhaft hat diese Lage eine dielektrische Konstante von 7,75 bei 25 ° und 1 MHz und einen spezifischen Widerstand von 9,7 Ω x cm in logarithmischer Darstellung bei 25 ° und 1 kHz. Derartige Materialien eignen sich insbesondere zur Oberflächenbeschichtung der Karte 1 und weisen gute Antireflexeigenschaften auf.

In einer weiteren Ausgestaltung kann die Karte 1 mindestens eine oder mehrere Lagen aus einem Spezialglas aufweisen, das im Vergleich zu herkömmlichen Kalknatrongläsern einen um mindestens 50 % reduzierten Natrongehalt aufweist.

Die dielektrische Konstante bei 20 ° und 1 MHz kann dann 6,7 betragen. Das vorgenannte Material bietet den Vorteil einer sehr gut einstellbaren Dickentoleranz.

In einer weiteren Ausgestaltung kann die Karte 1 mindestens eine Lage eines Aluminiumsilikatglases aufweisen, dessen Vickers-Härte mindestens 640 beträgt. Das Young'sche Elastizitätsmodul kann dann bei 78 kN/mm² liegen. Bei Verwendung eines solchen Materials kann eine mechanische Oberflächenpolitur häufig entfallen.

Vorteilhaft wirken sich die geringe thermische Ausdehnung und eine geringe Schrumpfung bei Temperaturänderungen aus. Der thermische Ausdehnungskoeffizient kann dann vorteilhaft bei höchstens 4, vorteilhaft etwa 3,7 x 10⁻⁶/K liegen. Die Schrumpfung kann kleiner als 5 ppm bei 400 °C für eine Stunde und eine Rampe von 2,5 °C/Minute liegen. Die dielektrische Konstante kann vorteilhaft 5,5 bei 25 °C und 1 MHz und der Dielektrizitätsverlust bei 0,2 % bei 25 °C und 1 MHz liegen. Der elektrische Durchgangswiderstand ist dann vorteilhaft sehr hoch und beträgt 10¹⁰ bis 10¹² Ω x cm.

In einer weiteren vorteilhaften Ausgestaltung kann die Karte 1 mit mindestens einer Lage oder vollständig aus einem glasartigen Material mit hoher und gleichmäßiger optischer Durchlässigkeit im sichtbaren und nahen Infrarotbereich bestehen. Die Knoop-Härte kann für dieses Material mindestens 500 und vorteilhaft etwa 540 betragen.

Das Elastizitätsmodul kann im Bereich zwischen 70 und 80 kN/mm², vorteilhaft bei 71,5 kN/mm² liegen. Die Dichte kann im Bereich von 2 bis 3 g/cm³ liegen. Bei Verwendung eines derartigen Materials lassen sich insbesondere sehr kostengünstige Zugangskarten erstellen. Die Dicke kann von 0,1 mm bis 3 mm variieren.

Die Ausführungsbeispiele der Karte 1 gemäß der vorliegenden Erfindung umfassen Ausgestaltungen, bei denen das glasartige Material vollständig über die gesamte Länge L, Breite B und Stärke D lediglich mit wenigen Aussparungen zur Aufnahme von elektronischen Komponenten verwendet wird. Derartige Karten 1 können also in einem Stück oder auch in einzelnen Lagen hergestellt werden.

Als Lagen im Kontext der vorliegenden Erfindung ist das Verkleben mehrerer dünner Glasschichten zu verstehen, die sich über die ganze Länge L und/oder Breite B der Karte erstrecken. In einer vorteilhaften Ausgestaltung können bis zu 20 Lagen oder mehr des gleichen oder verschiedener glasartiger Materialien übereinandergelegt werden.

Insbesondere kann die äußere Glasschicht auf einer oder beiden Seiten wenigstens teilweise für eine Berührungsmechanik bzw. Berührungssensorik gemäß einem Touchscreen ausgestaltet sein.

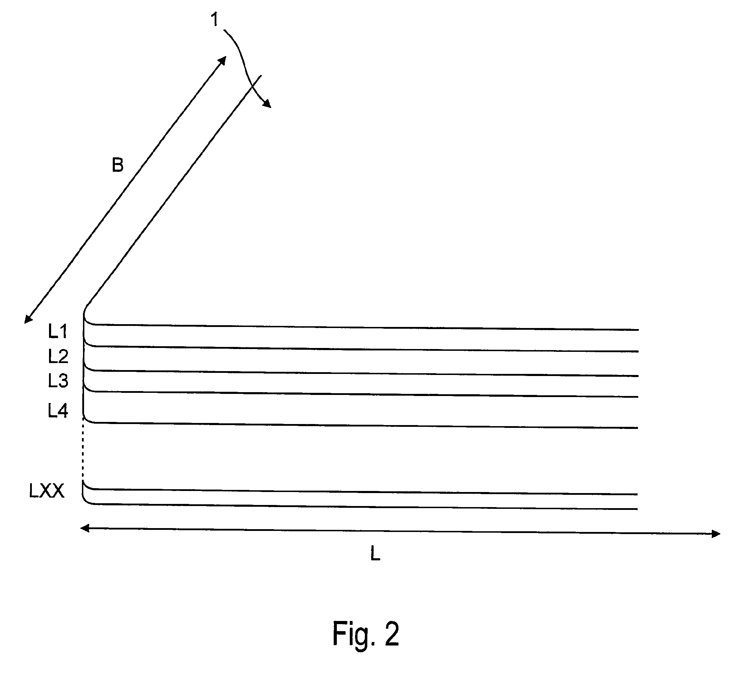

Figur 2 zeigt eine vereinfachte Darstellung eines weiteren Ausführungsbeispiels einer Karte 1 der vorliegenden Erfindung. Ein Kantenbereich der Karte 1 ist hierbei vergrößert dargestellt und die einzelnen Lagen L1, L2, L3, L4 ... bis LXX der Karte sind nochmals hervorgehoben, wobei XX, also die Gesamtanzahl der Lagen, insbesondere im Bereich 2 bis 20 sein kann. Die Stärken bzw. Dicken der Lagen L1 bis LXX können variieren. Ebenso können die verwendeten Materialien je Lage völlig verschieden sein. Die Stärke einer Lage L1 bis LXX kann insbesondere nur 30 µm oder bis zu 0,7 mm oder sogar mehr als 1 mm betragen. Hierdurch lassen sich vorteilhafte Sandwichaufbauten einer Karte 1 gemäß der vorliegenden Erfindung bereitstellen. Insbesondere kann jede der Lagen L1 bis LXX und gegebenenfalls auch noch mehr Lagen aus einem der Materialien mit den vorgenannten Eigenschaften bestehen.

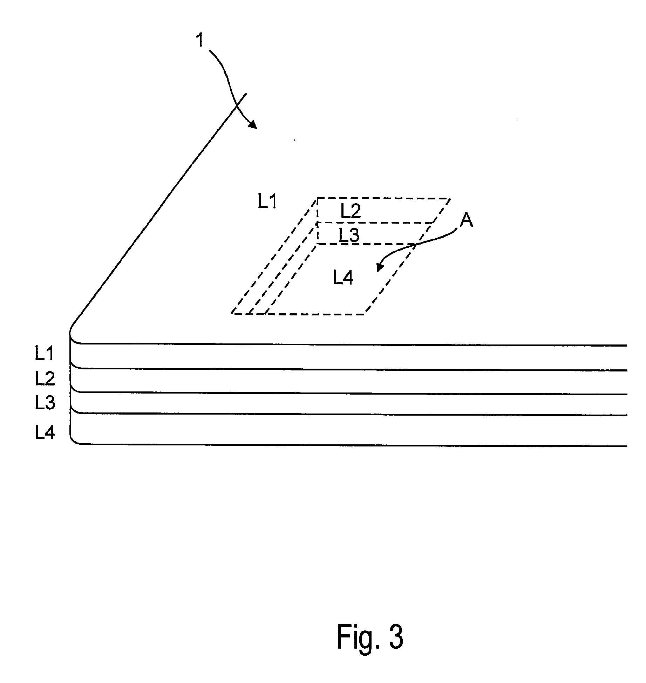

Figur 3 zeigt einen vereinfachten Detailausschnitt eines Ausführungsbeispiels der vorliegenden Erfindung. In diesem Ausführungsbeispiel wird die Ausnehmung zur Aufnahme von integrierten Schaltkreisen und weiterer Elektronik genauer dargestellt. Somit kann die erfindungsgemäße Karte 1 mehrere Lagen L1, L2, L3 und L4 aufweisen. Dabei sind für das vorliegende Beispiel zwei innere Lagen L2 und L3 vorgesehen, die von zwei äußeren Lagen L1 und L4 eingeschlossen werden. Die Lagen L1 und L4 stellen damit auch die äußeren Oberflächen der erfindungsgemäßen Karte 1 dar. Die inneren Lagen L2 und L3 weisen in diesem Fall identische Ausnehmungen A auf, durch welche sich beim Zusammenfügen der einzelnen Schichten ein Hohlraum ergibt, der von den Schichten L1 und L4 nach oben und nach unten abgedeckt wird. In diesen Hohlraum bzw. in dieser Ausnehmung A können vorteilhaft unterschiedliche elektronische Komponenten aufgenommen werden. Hierbei kann es sich um Mikrocontroller, Mikroprozessoren, Speicher mit wahlfreiem Zugriff (RAM), ein Festwertspeicher (ROM), einen nichtflüchtigen Speicher, Verschlüsselungsmodule, Kartenleserschnittstellen, einen RFID-Chip usw. handeln. Insbesondere sind hier vorteilhaft Materialien zu verwenden, die aus Silizium oder ähnlichen spröden Materialien bestehen. Diese können dadurch, dass sie vom Glas umfasst sind, in besonders vorteilhafter Weise geschützt werden. Außerdem wirkt sich vorteilhaft aus, dass dieses glasartige Material gemäß der vorliegenden Erfindung einen sehr hohen spezifischen Widerstand (ohmschen Widerstand) und gute Dielektrizitätseigenschaften aufweist. Hierdurch können in Bezug auf die hier eingeschlossenen elektronischen Komponenten sehr günstige Eigenschaften in Bezug auf die elektromagnetische Verträglichkeit eingerichtet werden. Insbesondere ist es ohne Weiteres möglich, elektromagnetische Wellen durch die Gläser zu den elektronischen Komponenten zu senden. Auch in Bezug auf Störungen der elektronischen Komponenten durch oder über die Karte sind hier optimale Bedingungen geschaffen. Die eingeschlossenen Komponenten sind elektrisch isoliert, jedoch elektromagnetisch durch elektromagnetische Funkwellen zu erreichen.

In anderen abgewandelten Ausführungsformen können natürlich deutlich mehr Lagen L1 bis L4, also beispielsweise 20 Lagen oder mehr verwendet werden. Die Schichtdicke der einzelnen Lagen kann variiert werden. Außerdem können zahlreiche Ausnehmungen an unterschiedlichen Stellen und auch an unterschiedlichen Bereichen der Lagen angeordnet werden. Darüber hinaus können elektrische (galvanisch) Verbindungen zwischen den einzelnen Ausnehmungen geschaffen werden, um unterschiedliche elektronische Komponenten so über die ganze Karte 1 kommunizieren zu lassen.

In einer vorteilhaften Ausgestaltung kann innerhalb der Ausnehmung A auch ein Fingerabdrucksensor angeordnet sein, der dann den Fingerabdruck kontrolliert, um den Karteninhaber zu identifizieren. Nur wenn dieser korrekt identifiziert ist, wird die Karte für beispielsweise monetäre Transaktionen freigegeben. In einer weiteren Ausgestaltung ist es möglich, unterschiedliche Benutzer anhand des Fingerabdrucks zu unterscheiden und aufgrund der internen Elektronik die Funktionsweise und Funktionsmöglichkeiten der Karte individuell automatisch anzupassen.

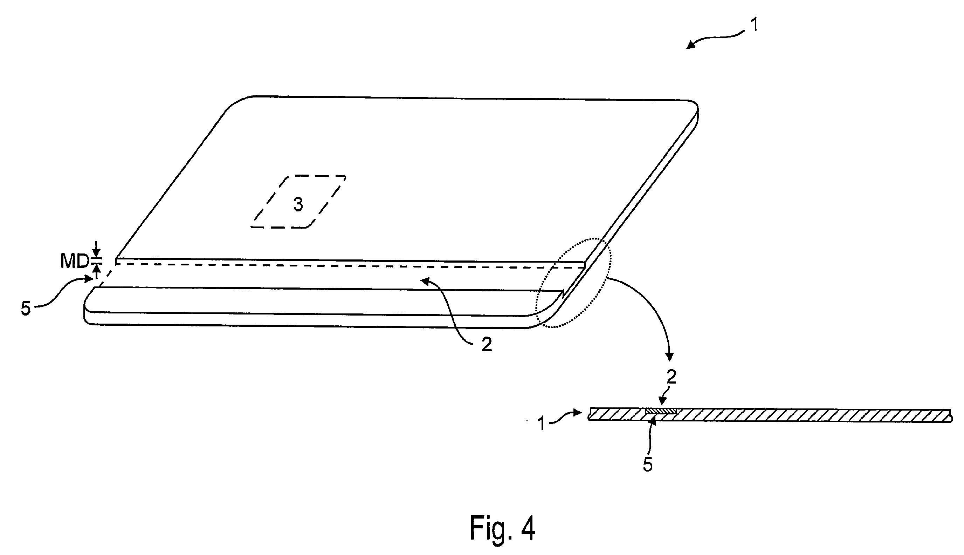

Figur 4 zeigt eine vereinfachte Darstellung eines weiteren Aspekts gemäß der vorliegenden Erfindung. Gemäß diesem Aspekt der Erfindung weist die Karte 1 zur elektronischen Zugangskontrolle einen Magnetstreifen 2 auf, der sich über die Länge der Karte 1 erstreckt. Dieser wird nicht wie sonst üblich auf die Oberfläche der Karte aufgeklebt, sondern in einer Vertiefung 5 angeordnet. Die Vertiefung 5 weist eine Tiefe MD auf, die mindestens so ausgestaltet ist, dass der Magnetstreifen vollständig in dieser verschwindet und nicht mehr über die Oberfläche der Karte 1 hinausragt. Hierdurch ist ein besonders sicheres Anbringen des Magnetstreifens und auch ein Verschleiß oder späteres Ablösen des Magnetstreifens 2 weitestgehend vermieden.

Darüber hinaus kann der Magnetstreifen vorteilhaft mit einem Flüssigklebstoff auf Acrylbasis in der Vertiefung 5 befestigt werden. In einer anderen Ausgestaltung wird der Magnetstreifen nach Art eines doppelseitigen Klebebandes in der Vertiefung angeklebt.

Die Vertiefung 5 kann in der Karte 1 bzw. der Trägerplatte oder dem Substrat der Karte 1 bereits beim Herstellungsverfahren (Pressverfahren) ausgespart oder nachträglich ausgefräst werden. Somit ist gewährleistet, dass der Magnetstreifen 2 plan mit der Oberfläche der Karte 1 abschließt. Dass selbe gilt für die Anbringung des Chips. Der Chip wird in eine dafür vorher ausgefrässte Vertiefung ( mindestens der Stärke des Chips) implantiert, damit die Oberfläche plan mit der des Glaskörpers ist. Für die Verklebung dient ein Klebstoff auf Basis acrylischer Polymere, welcher als Flüssigkleber oder aber auch als Klebeband aufgebracht werden kann. Figur 4 zeigt rechts eine Seitenansicht der Anordnung, wobei hier deutlich wird, dass der Magnetstreifen 2 die Vertiefung 5 so weit ausfüllt, dass die Oberfläche der Karte 1 im Wesentlichen plan ist. Selbiges gilt für den Chip (insbesondere EMV Chip).

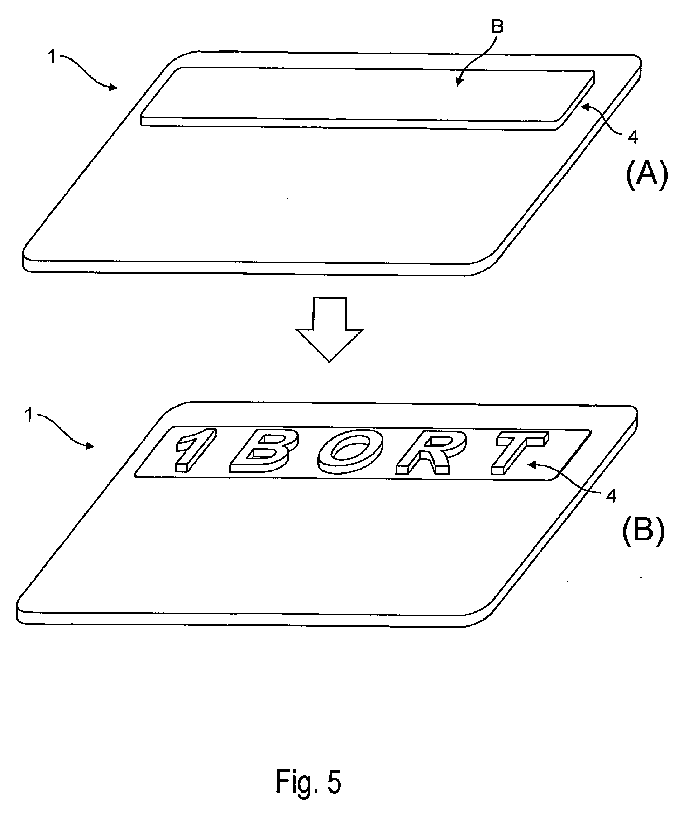

Figur 5 zeigt eine vereinfachte Darstellung einer Karte 1 gemäß einem weiteren Aspekt der vorliegenden Erfindung. Hierbei sind zwei Herstellungsschritte (A) und (B) für Ziffern und Zahlen, die auf der Karte angeordnet werden, gezeigt. Zunächst wird auf der Karte 1 im Rahmen des Pressverfahrens ein Balken B stehen gelassen. Dieser Balken oder Barren B kann insbesondere aus dem gleichen Material oder den gleichen Materialien wie die Lagen der Karte 1, insbesondere aus den vorgenannten glasartigen Materialien mit den genannten Eigenschaften bestehen. Hierdurch wird eine feste Verbindung zwischen den später entstehenden Buchstaben und der Karte 1 gewährleistet. Die Ziffern- und Buchstabenfolge 4 wird dann aus dem Block B herausgefräst. Dies ermöglicht eine deutlich höhere Stabilität. Im Unterschied zu den herkömmlichen Verfahren für Plastikkarten weist das erfindungsgemäße Verfahren einige Vorteile auf. Bei den Plastikkarten bzw. Kunststoffkarten werden erhabene Zahlen und Buchstaben mittels Durchdrücken von der gegenüberliegenden Seite durch die Karte erzeugt. Gemäß dem erfindungsgemäßen Verfahren wird beim Pressen der Trägerkarte bzw. der Karte 1 in dem Bereich B, wo später die Zahlen-/Buchstabenerhebungen 4 angeordnet sein sollen, ein Balken B auf dem Trägermaterial belassen. Gemäß einem Schritt des Herstellungsverfahrens kann so die Karte an allen Oberflächen gepresst werden, ausgenommen im Bereich B, wo später die Zahlenerhebungen entstehen sollen. Das erfindungsgemäße Verfahren hat den Vorteil, dass die Zahlen direkt mit der Trägerplatte verbunden sind, also aus demselben Material bestehen können und daher sehr fest und robust sind. Die Ausarbeitung der Zahlen kann zum Beispiel durch Fräsen erfolgen.

Gemäß einem anderen Aspekt der Erfindung können die Zahlen auch durch ein Spritz- bzw. Gussverfahren individuell aufgebracht werden. Es besteht auch die Möglichkeit, vorgefertigte Zahlen bzw. Buchstaben aus Metall oder Kunststoff maschinell aufzubringen und mit der Trägerplatte zu verkleben.

Aufgrund der erhöhten Zahlen und Buchstaben ist es auch für sehbehinderte Menschen möglich, ihre Karten zu identifizieren bzw. wichtige Daten in Bezug auf ihre Karten zu ermitteln. Weiterhin ergibt sich eine optisch ansprechendere Darstellung der Daten für den Benutzer der Karte. Schließlich lässt sich gemäß der Erfindung auch eine mechanische Nutzung der Karte durch Abdrücken der Buchstaben-Zahlen-Kombination auf Quittungen, Unterlagen oder Rechnungen erreichen. Auch hier wirkt sich die hohe Stabilität und geringe Flexibilität bzw. Elastizität der erfindungsgemäßen Karte positiv aus.

Gemäß dem vorteilhaften erfindungsgemäßen Herstellungsverfahren wird also in einem Schritt A gemäß Figur 5 ein Bereich B stehen gelassen, aus dem dann in Schritt B die Ziffern-Zahlen-Kombination 4 herausgearbeitet wird.

Die Oberfläche der Glaskarte kann grundsätzlich auf der Vorder wie Rückseite herkömmlich graviert, bedruckt oder bemalt werden. Dies vorwiegend um persönliche Daten des Karteninhabers aufzuzeichnen, ebenso Daten des Kartenherausgebers um Identitätsvergleiche zu ermöglichen.

## Patentansprüche

1. Karte (1) zur elektronischen Zugangskontrolle, wobei die Karte (1) mindestens einen Magnetstreifen (2) und/oder einen elektronischen integrierten Chip (3) aufweist, **dadurch gekennzeichnet, dass** die Karte (1) aus einem glasartigen transparenten Material besteht, dessen Knoop-Härtegrad mindestens 500 beträgt.

2. Karte (1) nach Anspruch 1, wobei das glasartige Material ein Borosilikatglas ist.

3. Karte (1) nach Anspruch 1 oder 2, wobei das glasartige Material in mindestens zwei Lagen (L1, L2, L3, L4, LXX) verarbeitet ist, die sich mindestens über die Länge (L) oder die Breite (B) der Karte (1) erstrecken.

4. Karte (1) nach einem der vorhergehenden Ansprüche, wobei die oberste Lage (L1) des glasartigen Materials berührungssensitiv ausgestaltet ist.

5. Karte (1) nach einem der vorhergehenden Ansprüche, wobei mindestens eine innere Lage (L2, L3) des glasartigen Materials eine Ausnehmung (A) aufweist, die sich weder über die gesamte Breite (B) noch über die gesamte Länge (L) der Karte (1) erstreckt.

6. Karte (1) nach einem der vorhergehenden Ansprüche, wobei die Karte (1) Zahlen- und/oder Buchstabenerhebungen (4) aufweist, wobei diese aus dem gleichen glasartigen Material bestehen, das auch in mindestens einer Lage (L1, L2, L3, L4, LXX) der Karte (1) verarbeitet wird.

7. Karte (1) nach einem der vorhergehenden Ansprüche, wobei die Karte (1) eine Ausnehmung (5) aufweist, die mindestens eine Tiefe (MD) hat, die der Stärke des Magnetstreifens (2) entspricht und in der der Magnetstreifen (2) angeordnet ist.

8. Karte (1) nach einem der vorhergehenden Ansprüche, wobei der Chip (3), insbesondere der EMV Chip, in eine dafür vorher ausgesparte Vertiefung (5) in die Karte (1) implementiert wird.

9. Karte (1) nach einem der vorhergehenden Ansprüche, wobei der Magnetstreifen (2) mit einem Flüssigklebstoff auf Acrylbasis auf der Karte (1) angebracht

10. Verfahren zum Herstellen einer Karte (1) zur elektronischen Zugangskontrolle gemäß Anspruch 1, mit dem Schritt: Bereitstellen einer Lage eines glasartigen transparenten Materials mit einem Knoop-Härtegrad von mindestens 500 über mindestens die gesamte Länge (L) und/oder Breite (B) der Zugangskarte (1).

## Claims

1. Card (1) for electronic access control, wherein the card (1) has at least one magnetic strip (2) and/or one electronic integrated chip (3), **characterized in that** the card (1) is composed of a glass-like transparent material which has a Knoop hardness of at least 500.

2. Card (1) according to Claim 1, wherein the glass-like material is a borosilicate glass.

3. Card (1) according to Claim 1 or 2, wherein the glass-like material is processed in at least two layers (L1, L2, L3, L4, LXX) which extend at least over the length (L) or the width (B) of the card (1).

4. Card (1) according to one of the preceding claims, wherein the topmost layer (L1) of the glass-like material is touch-sensitive.

5. Card (1) according to one of the preceding claims, wherein at least one inner layer (L2, L3) of the glass-like material has a recess (A) which extends neither over the entire width (B) nor over the entire length (L) of the card (1).

6. Card (1) according to one of the preceding claims, wherein the card (1) has raised numbers and/or letters (4), wherein these raised portions are composed of the same glass-like material which is also processed in at least one layer (L1, L2, L3, L4, LXX) of the card (1).

7. Card (1) according to one of the preceding claims, wherein the card (1) has a recess (5) which has at least one depth (MD) which corresponds to the thickness of the magnetic strip (2) and in which the magnetic strip (2) is arranged.

8. Card (1) according to one of the preceding claims, wherein the chip (3), in particular the EMC chip, is implemented in a cavity (5), which was previously made for this purpose, in the card (1).

9. Card (1) according to one of the preceding claims, wherein the magnetic strip (2) is attached to the card (1) using an acrylic-based liquid adhesive.

10. Method for producing a card (1) for electronic access control according to Claim 1, comprising the step of: providing a layer of a glass-like transparent material having a Knoop hardness of at least 500 over at least the entire length (L) and/or width (B) of the access card (1).

## Revendications

1. Carte (1) pour un contrôle électronique d'accès, la carte (1) comprenant au moins une bande magnétique (2) et/ou une puce intégrée électronique (3), **caractérisée en ce que** la carte (1) est constituée d'un matériau transparent vitreux, dont la dureté Knoop est d'au moins 500.

2. Carte (1) selon la revendication 1, dans laquelle le matériau vitreux est un verre au borosilicate.

3. Carte (1) selon la revendication 1 ou 2, **caractérisée en ce que** le matériau vitreux est réalisé en au moins deux couches (L1, L2, L3, L4, LXX) qui s'étendent au moins sur la longueur (L) ou la largeur (B) de la carte (1).

4. Carte (1) selon l'une des revendications précédentes, dans laquelle la couche supérieure (L1) du matériau vitreux est conçue sensible au toucher.

5. Carte (1) selon l'une des revendications précédentes, dans laquelle au moins une couche intérieure (L2, L3) du matériau vitreux comprend un évidement (A), qui s'étend ni sur toute la largeur (B), ni sur toute la longueur (L), de la carte (1).

6. Carte (1) selon l'une des revendications précédentes, la carte (1) comprenant des protubérances (4) en forme de chiffres et/ou de lettres, ces protubérances étant constituées du même matériau vitreux que celui qui est aussi réalisé dans au moins une couche (L1, L2, L3, L4, LXX) de la carte (1).

7. Carte (1) selon l'une des revendications précédentes, la carte (1) comprenant un évidement (5), qui a au moins une profondeur (MD) qui correspond à l'épaisseur de la bande magnétique (2), et dans lequel est disposée la bande magnétique (2).

8. Carte (1) selon l'une des revendications précédentes, dans laquelle la puce (3), en particulier la puce EMV, est implémentée dans la carte (1) dans un évidement (5) aménagé au préalable à cette fin.

9. Carte (1) selon l'une des revendications précédentes, dans laquelle la bande magnétique (2) est rapportée à la carte (1) à l'aide d'un adhésif liquide à base acrylique.

10. Procédé de fabrication d'une carte (1) pour un contrôle électronique d'accès selon la revendication 1, comprenant l'étape : réalisation d'une couche d'un matériau transparent vitreux ayant une dureté Knoop d'au moins 500 sur au moins toute la longueur (L) et/ou toute la largeur (B) de la carte d'accès (1).
